# EUROPEAN PATENT SPECIFICATION

(11) **EP 0 592 662 B1**
(45) Date of publication and mention of the grant of the patent: **02.02.2000**
(21) Application number: 90904692.2
(22) Date of filing: 15.03.1990
(51) Int. Cl.: G03G 5/02, G03G 15/18, G11B 9/08, G11B 11/08, G02F 1/135

(54) **Electrostatic information recording and reproducing method**
Verfahren zur elektrostatischen Aufzeichnung und Wiedergabe von Informationen
Procédé d'enregistrement et reproduction des informations

(30) Priority: 16.03.1989 JP 6426489; 18.03.1989 JP 6679389; 18.03.1989 JP 6679689; 18.03.1989 JP 6724289; 18.03.1989 JP 6724889
(43) Date of publication of application: 20.04.1994
(73) Proprietor: DAI NIPPON PRINTING CO., LTD., Tokyo 162-01 (JP)
(72) Inventor: IIJIMA, Masayuki Dai Nippon Printing Co., Ltd., Tokyo 162 (JP); DANTANI, Kyoji Dai Nippon Printing Co., Ltd., Tokyo 162 (JP); OBATA, Hiroyuki Dai Nippon Printing Co., Ltd., Tokyo 162 (JP); MATSUO, Makoto Dai Nippon Printing Co., Ltd., Tokyo 162 (JP); UTSUMI, Minoru Dai Nippon Printing Co., Ltd., Tokyo 162 (JP); TAKE, Seiji Dai Nippon Printing Co., Ltd., Tokyo 162 (JP)
(74) Representative: Bubb, Antony John Allen
(86) International application number: JP9000341
(87) International publication number: WO9010892

(56) References cited:
- EP-A- 0 275 601
- EP-A- 0 342 967
- EP-A- 0 348 982
- DE-A- 2 122 755
- DE-A- 2 440 485
- DE-B- 1 303 695
- DE-B- 2 011 575
- GB-A- 799 829
- GB-A- 2 179 006
- JP-A- 48 039 032
- JP-A- 61 138 957
- JP-B- 49 010 703
- JP-U- 52 142 841
- US-A- 3 615 389
- US-A- 3 639 640
- US-A- 3 730 710
- US-A- 4 095 280
- US-A- 4 675 699
- PATENT ABSTRACTS OF JAPAN, vol. 7, no. 253 (P-235)[1398], 10th November 1983; & JP-A-58 136 036 (TOMOEGAWA SEISHIJIYO K.K.) 12-08-1983
- JAPANESE PATENTS GAZETTE, week 8001, accession no. 80-00629C [01], Derwent Publications Ltd, London, GB; & JP-A-54 147 042 (FUJI PHOTO FILM K.K.) 16-11-1979
- PATENT ABSTRACTS OF JAPAN, vol. 2, no. 42 (E-23), 20th March 1978; & JP-A-53 007 240 (FUJITSU LTD) 23-01-1978
- PATENT ABSTRACTS OF JAPAN, vol. 14, no. 011 (P-988), 11th January 1990; & JP-A-1 259 266 (HAMAMATSU PHOTONICS K.K.) 16-10-1989
- PATENT ABSTRACTS OF JAPAN, vol. 5, no. 53 (M-63), 14th April 1981; & JP-A-56 008 293 (FUJI PHOTO FILM CO., LTD) 28-01-1981
- PATENT ABSTRACTS OF JAPAN, vol. 9, no. 296 (P-407), 22nd November 1985; & JP-A-60 131 543 (TOSHIBA K.K.) 13-07-1985
- PATENT ABSTRACTS OF JAPAN, vol. 9, no. 26 (P-332), 5th February 1985; & JP-A-59 171 053 (TOSHIBA K.K.) 27-09-1984
- PATENT ABSTRACTS OF JAPAN, vol. 8, no. 97 (P-272), 8th May 1984; & JP-A-59 009 666 (KONISHIROKU SHASHIN KOGYO K.K.) 19-01-1984
- JAPANESE PATENTS GAZETTE, week 7925, accession no. 79-46450B [25], Derwent Publications Ltd, London, GB; & JP-A-54 059 161 (CITIZEN WATCH K.K.) 12-05-1979
- WORLD PATENTS INDEX LATEST, week 8443, accession no. 84-268357 [43], Derwent Publications Ltd, London, GB; & SU-A-1076 740 (MECH. ENG. CORRSP. INS.) 28-02-1984
- JAPANESE PATENTS GAZETTE, week 7704, accession no. 77-06457Y [04], Derwent Publications Ltd, London, GB; & JP-A-51 142 333 (RICOH K.K.) 08-12-1976
- PATENT ABSTRACTS OF JAPAN, vol. 6, no. 238 (E-144), 26th November 1982; & JP-A-57 140 079 (OLYMPUS KOGAKU KOGYO K.K.) 30-08-1982
- PATENT ABSTRACTS OF JAPAN, vol. 2, no. 121 (E-63), 12th October 1978; & JP-A-53 088 530 (MITSUBISHI ELECTRIC CORP.) 04-08-1978
- PATENT ABSTRACTS OF JAPAN, vol. 11, no. 98 (M-575), 27th March 1987; & JP-A-61 248 788 (HITACHI LTD) 06-11-1986
- DATABASE WPIL, week 8836, accession no. 88-253907 [36], Derwent Publications Ltd, London, GB; & JP-A-63 184 758 (TORAY IND., INC.) 30-07-1988
- PATENT ABSTRACTS OF JAPAN, vol. 8, no. 159 (P-289), 24th July 1984; & JP-A-59 057 261 (CANON K.K.) 02-04-1984
- PATENT ABSTRACTS OF JAPAN, vol. 10, no. 149 (P-461)[2206], 30th May 1986; & JP-A 61 003 145 (RICOH K.K.) 09-01-1986

## Description

The present invention relates to an electrostatic information recording and reproducing method as claimed in claim 1.

In electrophotographic technique, a method is known in the past, in which a photoconductive layer is vacuum-deposited on an electrode layer, and the exposure is performed after the photoconductive layer is totally charged, electrostatic latent image is optically formed on the photoconductive layer by leaking electric charge on the exposed portion, the toner having electric charge of opposite polarity is attached on the residual electric charge, and the image is electrostatically transferred on paper or the like. This method is primarily used for duplicating purpose, while, according to this method, electrostatic charge retaining period on photoconductive layer is shortened, and toner development is performed immediately after electrostatic latent image is formed. Thus, this cannot be used for photographing purpose because of low sensitivity.

In the television imaging technique, line sequential scanning is required to take up and record electric image signals obtained through image pickup tube. Line sequential scanning is performed by electron beam in the image pickup tube and by magnetic head in video recording. Because resolution depends upon the number of scanning lines, the resolution is extremely decreased compared with planar analog recording such as conventional photography.

Further, the television imaging system using solid image sensor developed in recent years is also essentially the same as far as resolution is concerned. The problems with these techniques are: The higher quality and resolution the image recording has, the more complicated the process is, and the simpler the process is, the more it lacks the memory function or image quality is basically decreased.

Also, there is an electronic imaging technique. According to this method, electrode is vacuum-deposited on a photoconductive layer, and the entire surface of photoconductive layer is electrically charged by corona charging in dark place. Then, it is exposed to strong light to turn the exposed portion of the photoconductive layer to electrically conductive. By leaking electric charge on such portion, electrostatic latent image is optically formed on the surface of the photoconductive layer. The toner having electric charge of opposite polarity (or electric charge of the same polarity) is attached to the residual electrostatic charge, and the image is electrostatically transferred on paper or the like. This is mostly used for duplicating purpose, whereas it cannot be used for photographing because of low sensitivity. Because electrostatic charge retaining time on photoconductive layer as recording medium is short, toner development is usually performed immediately after electrostatic latent image is formed.

Further, a method is known, by which thermoplastic substance layer having selenium particle layer is furnished on a transparent electrode. After total surface corona charging and image exposure, the information is reproduced as visible information through heat development. The accumulated electric charge information is of permanent nature, while corona charging is required for information recording, and the information is reproduced by visualization. (U.S. Patent Specifications No. 3,520,681, No. 4,101,321, and No. 4,496,642)

In the electrostatic information recording medium having electrode layer and electric charge retaining layer, electrostatic information can be recorded in the form of information electric charge on the electric charge retaining layer through exposure under voltage application, and the accumulated information can be reproduced by reading, amplifying and outputting the surface potential on the surface of electric charge retaining layer. The object of the present invention is to improve electrostatic information retaining property on electrostatic information retaining medium and also to offer an electrostatic information recording medium having excellent electrostatic information (electric charge) retaining property and an electrostatic information recording and reproducing method.

The present invention is characterised in that electrostatic information recorded on an electrostatic information recording medium is electro-optically read by the method of claim 1.

### BRIEF DESCRIPTION OF THE DRAWINGS

Fig. 1 represents cross-sectional views of the first electrostatic information recording medium;
Fig. 2 shows perspective views of the shape of the electrostatic information recording medium;
Fig. 3 is a graphic representation of the relationship between electric charge retaining layer forming temperature and electric charge carrying property of the first electrostatic information recording medium;
Fig. 4 and Fig. 5 are to explain the electro-optical method to read electrostatic pattern recorded on the electrostatic information recording medium.

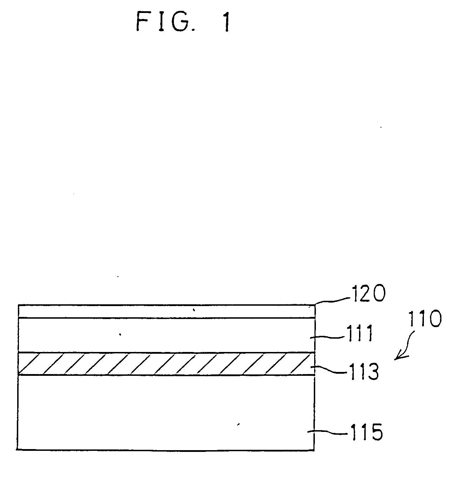

Fig. 1 represents cross-sectional views of the first electrostatic information recording medium. In the figure, 110 is an electrostatic information recording medium, 111 an electric charge retaining layer, 113 an electrode layer, 115 a support member, and 120 a protective layer.

The first electrostatic information recording medium is formed by laminating an electric charge retaining layer 111, consisting of an insulating layer having specific resistance of 10¹⁴ - 10¹⁸ Ω cm on an electrode 113 in order to increase the electric charge retaining property.

As the macromolecular materials to form the insulating layer, such materials can be used as polyethylene, vinyl chloride resin, polypropylene, styrene resin, ABS resin, polyvinyl alcohol, acryl resin, acrylonitrile-styrene resin, vinylidene chloride resin, AAS (ASA) resin, AES resin, cellulose derivative resin, thermoplastic polyurethane, polyvinyl butyral, poly-4-methylpentene-1, polybutene-1, rosin ester resin, etc. Further, as fluororesin, such materials can be used as polytetrafluoroethylene (PTFE), tetrafluoroethylene-perfluoroalkylvinylether copolymer (PFE), tetrafluoroethylene-hexafluoropropylene copolymer (FEP), tetrafluoroethylene-hexafluoropropylene-perfluoroalkylvinylether copolymer (EPE), tetrafluoroethylene-ethylene copolymer (ETFE), Polychlorotrifluoroethylene (PCTFE), chlorotrifluoroethylene-ethylene copolymer (ECTFE), etc. Also, polyparaxylylene given by the following structural formula can be used: 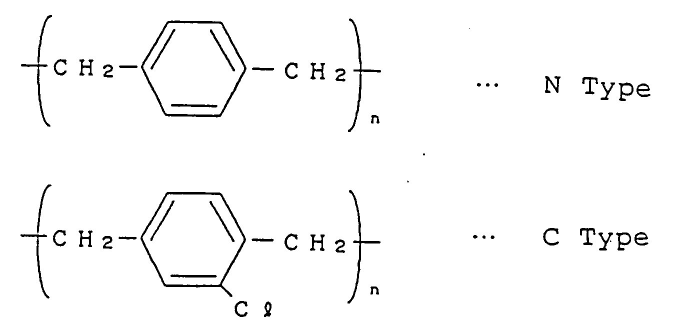 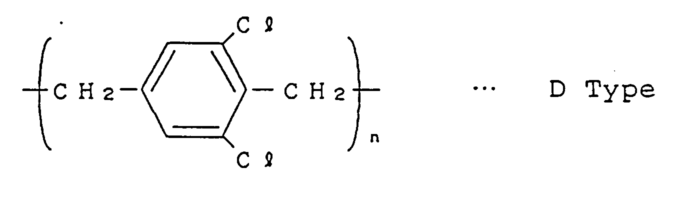 (The above Type C is not limited to the substance of the above structure, and it may be such substance that one of the sites other than the main chain bonding sites in the benzene ring is substituted by chlorine; Also, Type D may be the substance with two of the sites substituted by chlorine.)

Next, description is given to the method to manufacture the first electrostatic information recording medium.

The features of the first electrostatic information recording medium lie in the method to form the electric charge retaining layer. Specifically, when insulating material is laminated on an electrode to form the electric charge retaining layer, the electrode is heated by resistance heating (heating by connecting electric current to the electrode layer) to vacuum-deposit the insulating material and to laminate it on the heated electrode layer, or the insulating material is sputtered by argon discharge and is laminated on the heated electrode layer.

Also, the insulating material may be laminated on the electrode layer by vacuum deposition or by sputtering.

Next, description is given on the electrostatic information recording medium in connection with Fig. 1 of the drawings.

The electrode 113 on which the insulating layer 111 is laminated, is formed on the support member 115 as shown in Fig. 1

The electrode may be transparent or semi-transparent or may be non-transparent if there is no need to transmit light. Similarly to the insulating layer, it must have heat-resistant property, and there is no restriction on the material as far as specific resistance is 10⁶ Ω cm or less. It may be inorganic metal conductive film, inorganic metal oxide conductive film, or organic conductive film such as tertiary ammonium salt. Such electrode is formed by the methods such as vacuum deposition, sputtering, CVD, coating, metalplating, dipping, or electrolytic polymerization. It is necessary to change the film thickness according to the electrical characteristics of the material of the electrode or to the applied voltage during information recording. The film thickness may be 10-300nm (100 - 3000 Å), for example.

There is no restriction to the material and the thickness of the support member as far as it has the strength enough to support the electrostatic information recording medium. For example, flexible plastic film, paper, or rigid body such as glass, plastic sheet, etc. may be used. Light transmission property is required in some cases when electrostatic information is reproduced. When light transmission property is required, it is preferable that a reflection preventive film is furnished on the support member, or film thickness is adjusted on electrode layer or insulating layer, or these two may be combined to provide reflection preventive effect.

In case the electrostatic information recording medium takes the form of flexible film, tape, or disk, flexible plastic film is used as the support member. In case strength is required, inorganic materials such as sheet, or glass having rigidity are used.

The electrostatic information recording medium can take various forms according to the information to be recorded or to the recording method. For example, it takes the form of general, film (single frame, or continuous frame) or disk in case it is used for electrostatic camera. In case digital information or analog information is recorded by laser or the like, it takes the form of tape, disk or card.

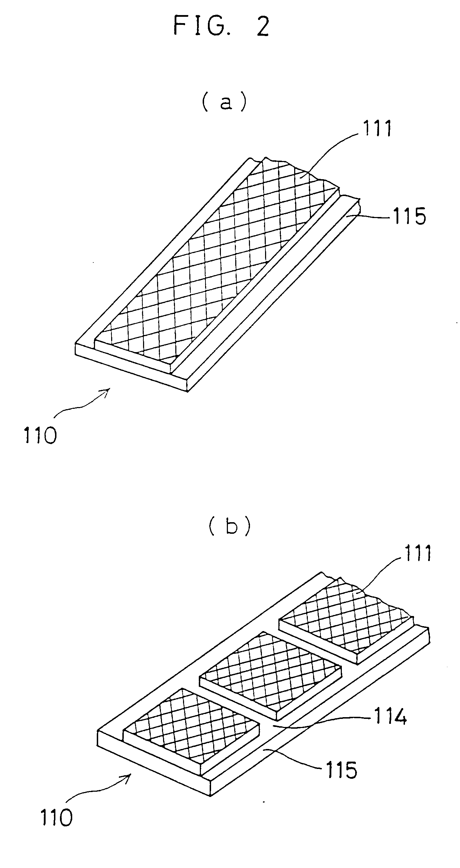

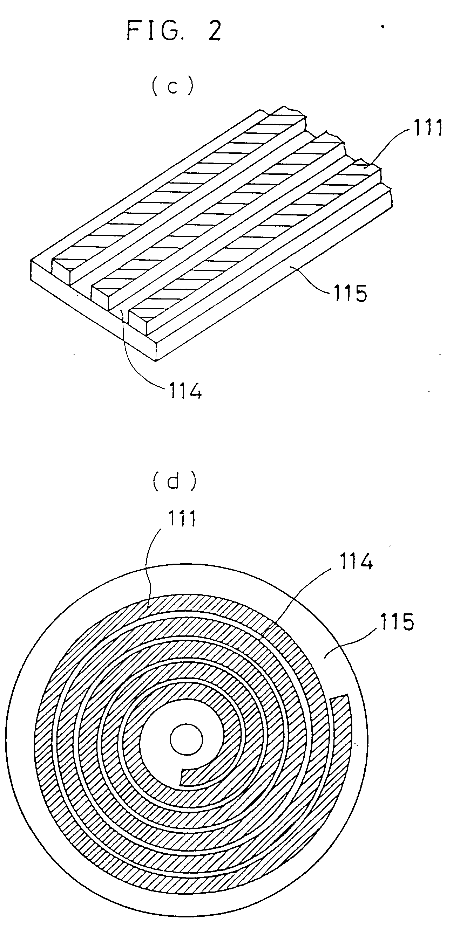

Next, description is given to the case where the electrostatic information recording medium takes the form of flexible film, tape or disk by Fig. 2. In the figure, 111 is an insulating layer, 114 an insulating layer lacking portion, and 115 a support member.

Fig. 2 (a) shows a type, in which the insulating layer 111 to record is continuous.

In this case, the insulating layer is formed on the entire surface of the support member, consisting of plastic film placed on the electrode layer except both ends of the support member. This electrostatic information recording medium is more than two times as long as one screen to be recorded (e.g. at least one frame in case of camera photographing, and track width in case of digital information recording). Naturally, this includes a combination of two or more electrostatic information recording media in longitudinal direction. In this case, there may be a slit zone where insulating layer is lacking between the adjacent insulating layers.

As shown in Fig. 2 (b), there is a type, in which the insulating layer 111 is discontinuous in longitudinal direction.

This is formed by providing the insulating layer discontinuously on a support member of plastic film, leaving or not leaving both ends of the support member intact. Two or more insulating layers are formed in a certain size on the support member. The size of the insulating layer depends upon the image and the exposure method of information input unit. For example, it is 35 mm x 35 mm in case of camera photographing, and it is equal to the track width of digital information recording in case of spot input such as laser beam. In case of digital information recording, the insulating layer lacking portion formed between the adjacent insulating layers can be used as tracking zone or information input and output. This naturally includes a combination of two or more electrostatic information recording media in longitudinal direction. In this case, there may be a slit zone lacking the insulating layer between the adjacent insulating layer.

As shown in Fig. 2 (c), there is a type, in which the insulating layer 111 is discontinuous in lateral direction.

In this case, the insulating layer is formed discontinuously in lateral direction of the support member, consisting of plastic film placed on the electrode layer, leaving or without leaving both ends of the support member intact. Two or more band-like insulating layers are formed on the support member. The width of the insulating layer is either equal to or integer multiple of the track width of digital information, and the insulating layer lacking portion formed between adjacent insulating layers is used as tracking zone for information input or output.

As shown in Fig. 2 (d), there is a disk-like type.

In this type, insulating layer is formed on the entire surface of the support member, consisting of circular plastic film placed on the electrode layer, or leaving the insulating layer lacking portion in continuous spiral form. On this electrostatic information recording medium, circular lacking portion may be formed for driving the input/output unit. In case of digital information recording, the insulating layer lacking portion in continuous spiral form can be used as tracking zone for information input and output.

In the following, the invention will be described by a number of examples:

### [Example 1]

On a glass substrate of 1 mm thick, aluminum electrode was evaporated in thickness of 1000 Å by vacuum evaporation method (10-5 Torr). On this aluminum electrode, chlor-trifluoroethylene (CTFE) (manufactured by Daikin Industry) powder was applied by vacuum deposition method (10-5 Torr) and laminated in film thickness of about 17 - 20 µm at evaporation speed of 0.8 - 1.8 µm/min. under conditions that electrode substrate temperature was kept at room temperature or resistance heating was performed at 45°C, 65°C or 105°C. Thus, the electrostatic information recording media were prepared under each of these conditions.

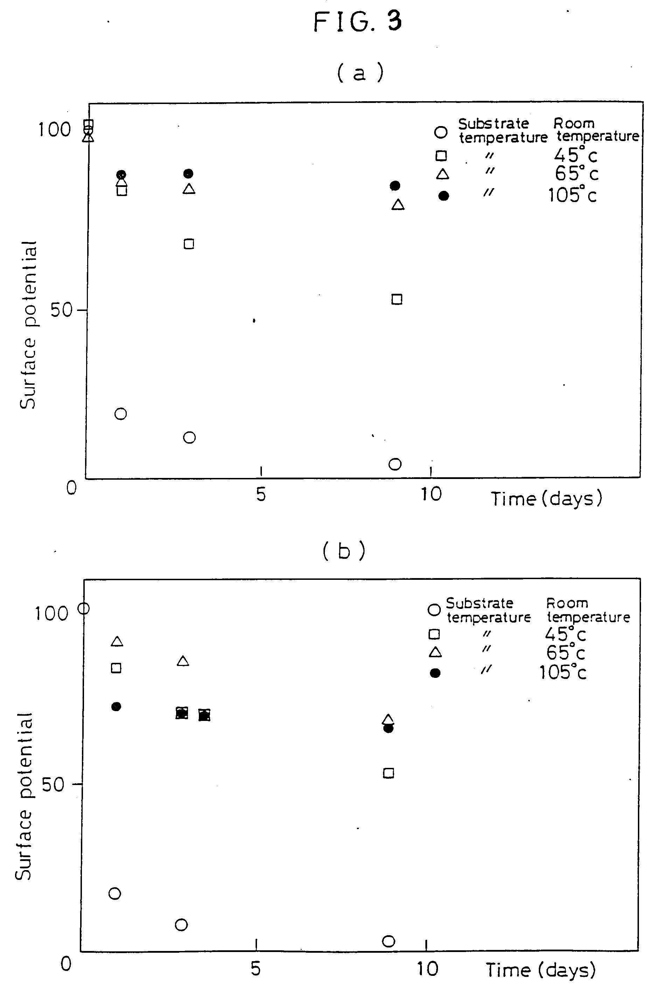

On each of the electrostatic information recording media thus obtained, electric charge was given to have the surface potential of +100 V or -100 V by corona charging, and then electric charge retaining property was measured. Fig. 3 (a) shows the results in case of + charging, and Fig. 3 (b) the results in case of - charging.

As it is evident from the figure, electric charge does not leak almost at all after the electrostatic information recording media were left for 10 days. However, when laminated by keeping substrate at room temperature, electric charge was rapidly attenuated on the first day.

### [Example 2]

On a glass substrate of 1 mm thick, aluminum electrode is evaporated in thickness of 1000 A by vacuum evaporation method (10-5 Torr). On this aluminum electrode, chlor-trifluoroethylene (CTFE) (Daikin Industry) powder was laminated in thickness of about 17 - 20 µm by vacuum evaporation method (10-5 Torr) at evaporation speed of 0.8 - 1.8 µm/min. with electrode substrate at room temperature. Then, it was heated at 200°C by oven, and electrostatic information recording media were prepared.

On the electrostatic information recording media thus obtained, electric charge was given by corona charging to have the surface potential of +100 V or -100 V, and the electric charge retaining property was measured. As the result, electric charge did not leak almost at all even after the media were left for 10 days, and the surface potential of 98 V was maintained.

### [Example 3]

On a glass substrate of 1 mm thick, aluminum electrode was laminated in thickness of 1000 Å by vacuum eveporation method (10-5 Torr). On this aluminum electrode, polytetrafluoroethylene (PTFE) (Daikin Industry) powder was laminated by vacuum evaporation method (10-5 Torr) at the evaporation speed of 0.8 - 1.8 µm/min. to film thickness of about 17 - 20 µm with electrode substrate temperature kept at 150°C, and electrostatic information recording media were obtained.

On the electrostatic information recording media thus obtained, electric charge was given by corona charging to have the surface potential of +100 V or -100 V, and the electric charge retaining property was measured. As the result, electric charge did not leak almost at all after the media were left for 10 days, and the surface potential of 99 V was maintained.

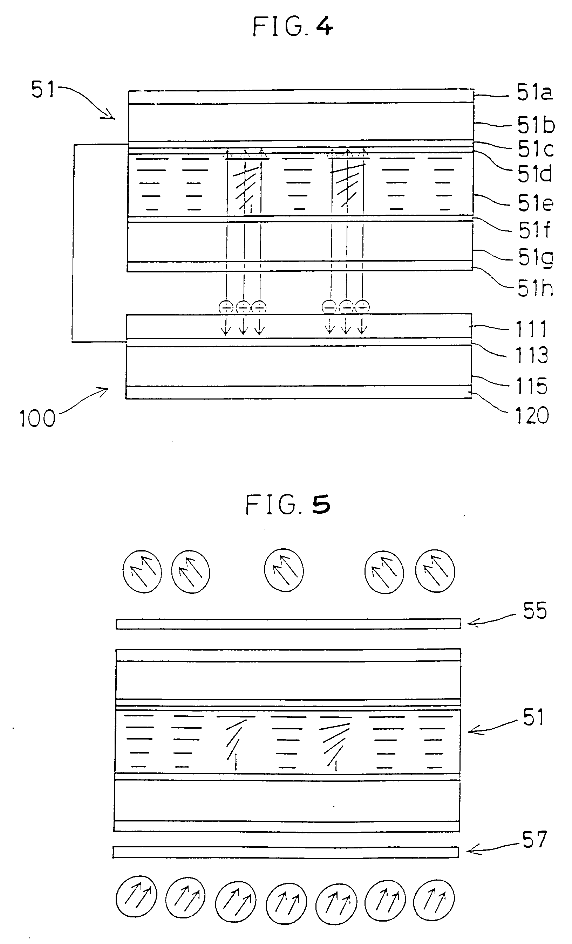

Fig. 4 and Fig. 5 are to explain the electro-optical reading method of the electrostatic pattern of the present invention. In the figures, 51 is an electrostatic pattern reading unit, 51a and 51h are reflection preventive layers, 51b and 51g are glasses, 51c is a transparent electrode, 51d and 51f are orientation layers, 51e liquid crystal, 100 an electrostatic information recording medium, 111 an insulating layer, 113 an electrode, 115 a glass support member, 120 a reflection preventive layer, and 55 and 57 are polarizing plates.

In Fig. 5, the electrostatic information recording medium 100 consists of a transparent glass support member 115, on which a transparent electrode 113 and an insulating layer 111 are laminated, and on the backside of which a reflection preventive layer 120 is formed. On the insulating layer 111, electric charge is accumulated in pattern-like form by the exposure under voltage application as described above.

The electrostatic pattern reading unit 51 placed face-to-face to this has such structure that a liquid crystal 51e is sandwiched by orientation layers 51d and 51f and by glasses 51b and 51g and that reflection preventive layers 51a and 51h are provided on the surface of the glasses. Further, a transparent electrode 51c is furnished between the glass 51b and the orientation layer 51d and it is to be short-circuited with the electrode 113 of the electrostatic information recording medium, on which electrostatic pattern is formed. The orientaion layers 51d and 51f are placed in such manner that the directions of the orientations intersect with each other at right angle. Therefore, the molecules of liquid crystal are twisted by 90 degrees between the orientation layers of 51d and 51f. When the light polarized in vertical direction enters the paper surface from the direction of the reflection preventive layer 51h, 90° rotation occurs in the liquid crystal, and the light goes out of the reflection preventive layer 51a as the light polarized in parallel to paper surface.

A reflection preventive layer 120 may be provided on the backside of the electrostatic information recording medium 100, and light is irradiated from the direction of the electrostatic information recording medium so that electro-optical reading can be performed with the electrostatic information recording medium and electro-optical element at the positions close to each other.

By the electric charge accumulated on the insulating layer 111, electric charge of opposite polarity is induced on the electrode 113, and the electric charge with the polarity opposite to the surface electric charge is also induced on the electrode 51c of the reading unit, connected to the above electrode and with the same potential. As the result, electric line of force extends from the accumulated electric charge to the electrode 51c as shown in the figure, and molecular arrangememt of liquid crystal on the portion facing to the position where electric charge is accumulated is changed by the effect of electric field. Thus, the light entering from the reflection preventive layer 51h is not subject to 90° rotation.

If it is supposed that the liquid crystal 51e has memory property, electrostatic pattern is preserved as the disturbance of liquid crystal even when it is separated from the electrostatic information recording medium.

As shown in Fig. 5, polarizing plates 55 and 57 are placed on both sides of the electrostatic pattern reading unit 51 so that the polarizing directions intersect with each other at right angle. Under this condition, the polarizing direction is not rotated by 90 degrees on the portion where molecular arrangement is disturbed by the effect of electric charge. Thus, the polarized light passing through the polarizing plate 57 cannot pass through the polarizing plate 55. On the other hand, on the portion where electric charge pattern is not formed and molecular arrangement is not disturbed, 90° rotation occurs, and light passes through the polarizing plate 55. Therefore, when viewed from the polarizing plate 55, the portion where electric charge is formed is seen as dark, and the portion where light passes is seen as bright. As the result, the electrostatic pattern can be observed. Although it is provided with memory property, when the reading unit is separated from the electrostatic information recording medium and the effect of electric field to liquid crystal is removed, the disturbance of molecular arrangement ceases to be continuous. When electric field strength is higher than a certain level, the disturbance remains as it is, while it does not remain almost at all at the portion where electric field strength is lower than a certain level. Thus, the image observed is binary image. Accordingly, to read it as a photograph-like image, it is necessary to place it face-to-face to the electrostatic information recording medium and to read it with the electrodes short-circuited with each other. For this purpose, the electrostatic informain recording medium 100 must be transparent and reflection preventive layer 120 must be furnished on its backside.

In the above examples, description has been given mainly on the light which passes through electro-optical element of the reading unit, whereas reflected light may be used. In such case, the electrode 51c needs not be transparent and it may be aluminum electrode. Also, the reflection preventive layer 51a can be omitted.

## Claims

1. An electrostatic information recording and reproducing method, comprising a liquid crystal element (51) having memory characteristic and with optical characteristics changeable under the effect of an electric field, said liquid crystal element being disposed in face-to-face relationship with an electrostatic recording medium (100), which has an electrode (113) and an insulating layer (111) formed on a support member (115) and electric charge is formed thereon, said method comprising the steps of short-circuiting electrodes (113, 51c) of said liquid crystal element (51) and of said electrostatic information recording medium (100), storing an electric charge pattern information in said liquid crystal element, irradiating said liquid crystal element with light, and reading said electric charge pattern by transmitted or reflected light.

2. An electrostatic information recording and reproducing method according to Claim 1, wherein reflection preventive layers (51a, 51h) are provided on both sides of said liquid crystal element (51).

3. An electrostatic information recording and reproducing method according to Claim 1, wherein a reflection preventive layer (120) is provided on a side of the electrostatic information recording medium (100) opposite to the liquid crystal element (51), and after short-circuiting the electrode (113) of said electrostatic information recording medium with the electrode (51c) of said liquid crystal element, light is irradiated through said electrostatic information recording medium.

## Patentansprüche

1. Verfahren zur elektrostatischen Aufzeichnung und Wiedergabe von Informationen, mit einem Flüssigkristallelement (51), das Speichereigenschaften hat und bei dem optische Eigenschaften unter der Einwirkung eines elektrischen Feldes veränderbar sind, wobei das Flüssigkristallelement in einander zugewandter Beziehung zu einem elektrostatischen Aufzeichnungsmedium (100) angeordnet ist, das eine Elektrode (113) und eine isolierende Schicht (111) hat, die auf einem Trägerbauteil (115) ausgebildet sind und auf der eine elektrische Ladung gebildet wird, wobei das Verfahren die Schritte des Kurzschließens der Elektroden (113, 51c) des Flüssigkristallelements (51) und des elektrostatischen Informationsaufzeichnungsmediums (100), das Speichern von einer elektrischen Ladungsträgerinformation in dem Flüssigkristallelement, das Bestrahlen des Flüssigkristallelements mit Licht und das Lesen des elektrischen Ladungsmusters mit Hilfe von durchfallendem oder reflektiertem Licht umfaßt.

2. Verfahren zur elektrostatischen Aufzeichnung und Wiedergabe von Informationen nach Anspruch 1, bei dem Reflektion verhindernde Schichten (51a, 51h) an beiden Seiten des Flüssigkristallelements (51) vorgesehen sind.

3. Verfahren zur elektrostatischen Aufzeichnung und Wiedergabe von Informationen nach Anspruch 1, bei dem eine Reflektion verhindernde Schicht (120) an einer Seite des elektrostatischen Informationsaufzeichnungsmediums (100) gegenüber dem Flüssigkristallelement (51) vorgesehen ist, und wobei nach dem Kurzschliessen der Elektrode (113) des elektrischen Informationsaufzeichnungsmediums mit der Elektrode (51c) des Flüssigkristallelements Licht durch das elektrostatische Informationsaufzeichnungsmedium gestrahlt wird.

## Revendications

1. Procédé d'enregistrement et de reproduction d'information électrostatique, comprenant un élément à cristal liquide (51) ayant une caractéristique de mémoire et avec des caractéristiques optiques capables de changer sous l'effet d'un champ électrique, ledit élément à cristal liquide étant disposé dans une relation de vis-à-vis avec un support d'enregistrement électrostatique (100), qui a une électrode (113) et une couche isolante (111) formées sur un élément de support (115) et une charge électrique est formée dessus, ledit procédé comprenant les étapes de mise en court-circuit des électrodes (113, 51c) dudit élément à cristal liquide (51) et dudit support d'enregistrement d'information électrostatique (100), de stockage d'une information sous forme de motif de charge électrique dans ledit élément à cristal liquide, d'exposition dudit élément à cristal liquide à la lumière, et de lecture dudit motif de charge électrique par la lumière transmise ou réfléchie.

2. Procédé d'enregistrement et de reproduction d'information électrostatique selon la revendication 1, dans lequel des couches empêchant la réflexion (51a, 51h) sont disposées sur les deux côtés dudit élément à cristal liquide (51).

3. Procédé d'enregistrement et de reproduction d'information électrostatique selon la revendication 1, dans lequel une couche empêchant la réflexion (120) est disposée sur un côté du support d'enregistrement d'information électrostatique (100) opposé à l'élément à cristal liquide (51), et après mise en court-circuit de l'électrode (113) dudit support d'enregistrement d'information électrostatique avec l'électrode (51c) dudit élément à cristal liquide, une lumière est irradiée à travers ledit support d'enregistrement d'information électrostatique.
